# EUROPEAN PATENT SPECIFICATION

(11) **EP 1 012 836 B1**
(45) Date of publication and mention of the grant of the patent: **14.07.2004**
(21) Application number: 97940937.2
(22) Date of filing: 10.09.1997
(51) Int. Cl.: G11B 7/24, G11B 7/013

(54) **DUAL DATA RECORDED COMPACT DISC**
MIT ZWEIDIMENSIONALEN DATEN AUFGEZEICHNETE KOMPAKT-DISK
DISQUE COMPACT ENREGISTRE A DONNEES DOUBLES

(43) Date of publication of application: 28.06.2000
(73) Proprietor: WEA Manufacturing, Inc., Olyphant, PA 18447 (US)
(72) Inventor: MECCA, Charles, Jessup, PA 18434 (US)
(74) Representative: Neugebauer, Jürgen, Dipl.Phys.
(86) International application number: PCT/US1997/015911
(87) International publication number: WO 1999/013466

(56) References cited:
- WO-A-97/25709
- US-A- 5 453 969
- US-A- 5 471 455
- US-A- 5 559 787
- US-A- 5 577 016
- US-A- 5 607 188
- PATENT ABSTRACTS OF JAPAN vol. 013, no. 073 (P-830), 20 February 1989 (1989-02-20) & JP 63 257921 A (HITACHI MAXELL LTD), 25 October 1988 (1988-10-25)
- PATENT ABSTRACTS OF JAPAN vol. 010, no. 312 (P-509), 23 October 1986 (1986-10-23) & JP 61 123026 A (MATSUSHITA ELECTRIC IND CO LTD), 10 June 1986 (1986-06-10)

## Description

Compact discs are typically composite objects having a series of pits impressed into a plastic surface, usually during an injection molding process. These pits and the lands between them are arranged in a spiral pattern that can be tracked by a laser beam which advances slowly along a radius while the disc is spun about an axis through the center of the disc. The pit/land surface is coated with a thin reflective metal layer. The laser beam is reflected from the metal layer coating the pits and lands and the reflection is analyzed to observe the change in reflectivity associated with a transition from a land to a pit or vice versa. To enhance the change in reflectivity the wavelength of light is chosen to cause interference between light reflected from the bottom of a pit and light reflected from a land. In common practice, the light is incident from the side that sees the pit as a bump, and the reference to light reflected from the bottom of a pit herein may be understood as light reflected from the pit seen from beneath as a bump.

The wavelength of light is not chosen arbitrarily, but is related to the depth of the pits. By detecting the change in reflectivity, the length of the pit and or land is measured. Data is encoded onto the compact disc as varying lengths of the pits and lands. The data may be analog or digital data. For example a voltage level may correspond directly to a pit length in an analog recording, or the length of the pits/lands may represent strings of 0's or 1's for the recording of digital data. US-A-5 559 787 is an example of this pit length coding.

The amount of data that can be encoded onto a disc is limited by the density of pits and lands that can be accurately reproduced by the injection molding procedure and that can be accurately read by the scanning laser device. Some error rate can be tolerated if the data is placed on the disc in a somewhat redundant format that allows errors to be sensed and corrected. Thus as the pits and lands are decreased in size it becomes necessary to provide greater redundancy in the data until a limit is reached in the amount of data that can be stored on the disc surface.

WO 97 25709A discloses using multiple pit depth as the encoding medium for the digital data on an optical storage disc. The level of light refracted from the pits determines a voltage level of a sensor, which in turn is decoded for recovering the digital data. There is no teaching to the using variable pit depth for one digital coding and pit length for a second digital coding.

### BRIEF DESCRIPTION OF THE INVENTION

The present invention stores two separate streams of optical data on a CD as two dimensional (i.e. pit length and pit depth) data along the spiral track. One of the data streams corresponds to pit depth and may be used to implement a hologram on the data recording surface. The preferred form of the invention uses a uniform pit depth within each pit, causing pit depth to vary only from pit to pit and not within a single pit. The second data stream requires less error correction data encoded as pit depth; it relies on the primary data stream encoded as pit length for much of the necessary error correction required in the compact disc.

The invention relies on the unexpected discovery that it is not necessary to fix pit depth at one quarter of a wavelength of the reading laser in order to effectively read data from a compact disc.

### BRIEF DESCRIPTION OF DRAWINGS

Fig. 1 represents a schematic view of a CD and its reading components.
Fig. 2 represents a cross section view of the data recording surface of a CD according to the present invention.
Fig. 3 represents the intensity level diagram for the output voltage signal at the reader head of a CD player for the present invention.
Fig. 4 represents a schematic block diagram of the algorithmic logic of the data interpreter of the present invention.
Fig. 5 represents a diagram of the intensity level for the output voltage signal showing the voltage levels triggering the logic of Fig. 4.

### DETAILED DESCRIPTION OF A PREFERRED EMBODIMENT

The present invention implements an unexpected discovery concerning data recorded as pits on a compact disc, namely that the depth of the pits is, contrary to the published literature, not a critical parameter in the manufacture of such discs. For purposes of this disclosure the compact discs will be referred to as CDs, but it should be understood that the term CD is intended to include multiple sided compact discs and to the DVD format or other optical recording formats as well.

In particular, it has been unexpectedly discovered that a laser reading beam need not have a wavelength that is approximately 4 times the depth of a pit or bump. Indeed it has been unexpectedly discovered that a wavelength approximately 2 times the depth of a pit or bump is most effective for reading data from the compact disc. This directly contradicts the simplistic view of the interference/diffraction/scattering effects at the surface of the data region of a compact disc and is believed to be caused by the complexity of the interference/diffraction of light from an irregularly pitted surface.

This unexpected discovery opens up literally a new dimension for the storage of digital data on compact discs. Whereas data has been stored one dimensionally as pit lengths along a spiral track, the present invention enables one to store the data two dimensionally as both pit length and pit depth along the spiral track. The preferred embodiment of this invention uses a uniform pit depth for each pit, causing pit depth to vary only from pit to pit and not within a single pit. This provides two advantages. First it enhances quality control because it is possible to recognize unintended pit variation when it occurs within a single pit. Second it enables the use of conventional data recording equipment in the compact disc recording field.

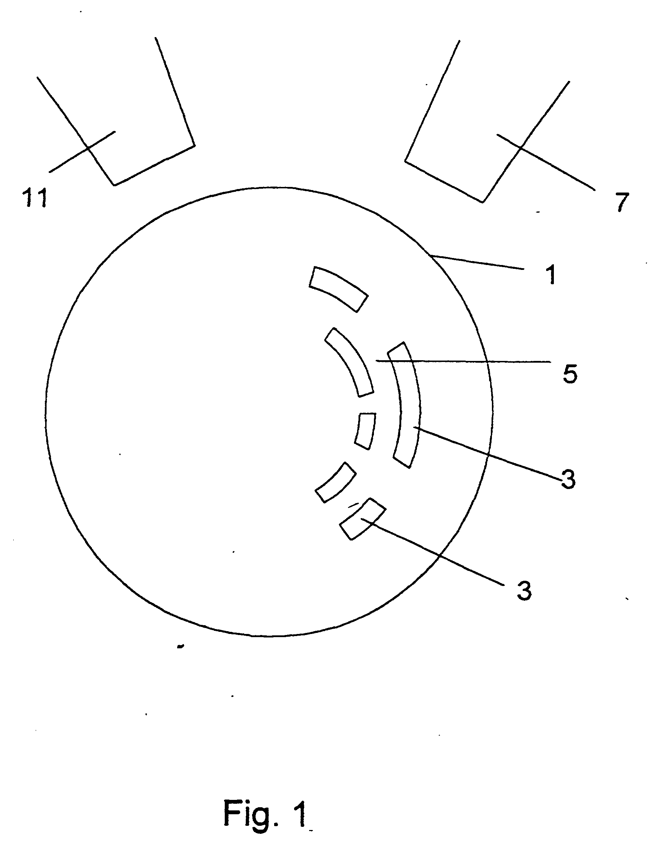

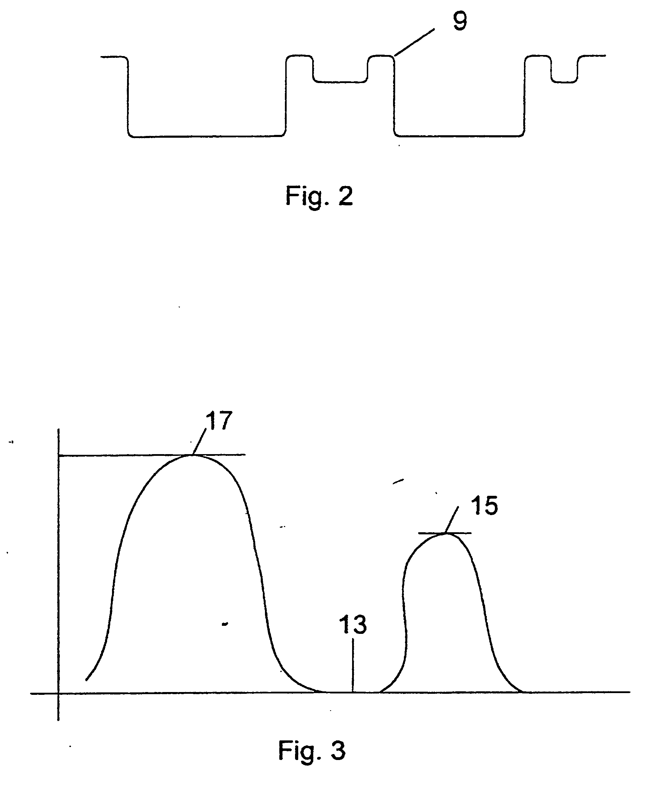

Figure 1 depicts a compact disc 1 or single surface of a two sided disc with the data pits 3 greatly enlarged. The pits are arranged in a spiral pattern with a land area 5 between adjacent spirals so that they may be read in sequence by a reading laser 7. Figure 2 depicts a cross section of the information bearing surface 9 of the compact disc, preferably a metallic film capable of reflecting laser light, the film being embedded in a plastic protective layer through which laser light reflected from the data surface may be detected by a reading head 11. The surfaces are formed with pits of varying depth, by a method to be described below, and the reading head contains a peak detecting means that is capable of sensing the depth of pit.

Figure 3 shows a typical voltage signal as a function of time corresponding to the intensity of the light received in the photodetector of the reading head of the compact disc player. Since the disc rotates at constant linear velocity under the reading head Figure 3 also shows an indication of the depth of the pit along the data track. As shown in Figure 3, a low intensity signal 13 represents a pit having a wavelength of approximately λ/2. A medium intensity signal 15 represents a pit having a wavelength of approximately λ/4. A high intensity signal 17 represents a land area between pits on the data recording surface.

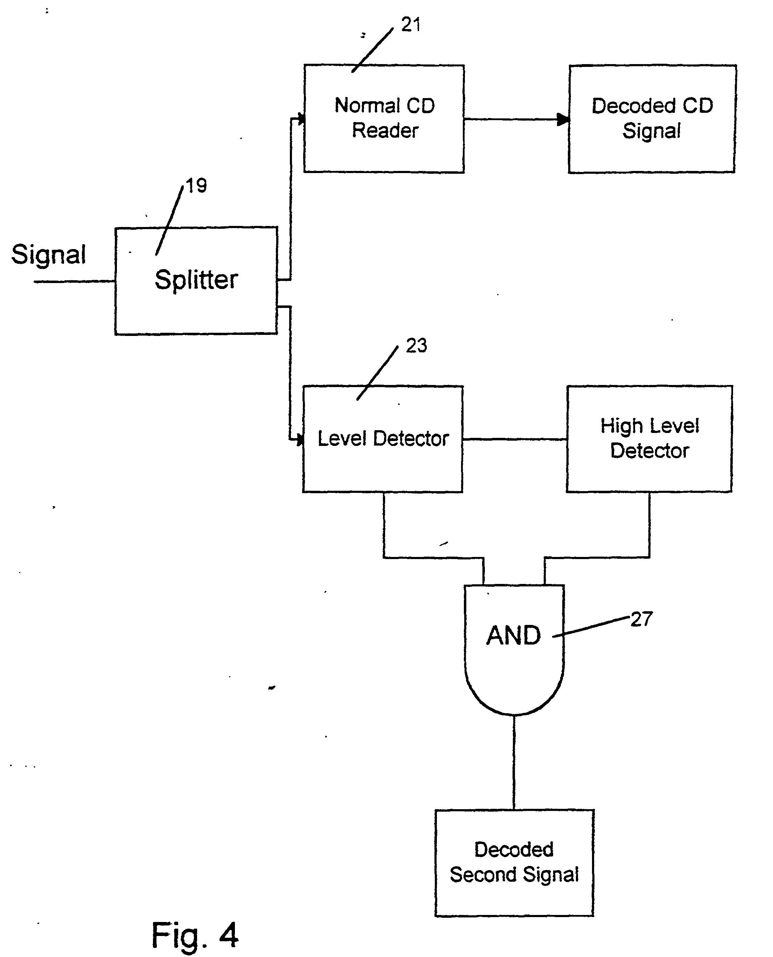

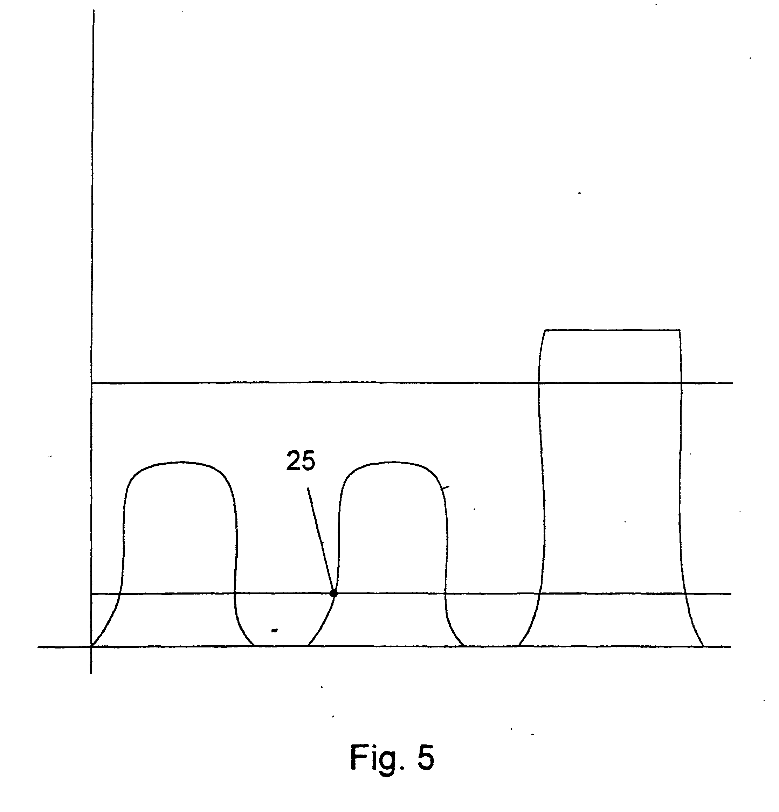

In operation the reading head of the player senses a variation of intensity of the signal reflected from the data containing surface. The intensity encodes two data signals that must be unfolded from each other. This is accomplished by the algorithm schematically represented in Fig. 4. The signal is first passed through a signal splitter and one portion is sent to a logical analyzer 21 to perform the normal CD interpretation of the pit/bump length data. The second portion is sent to logical analyzer 23, i.e., a level detector which recognizes the crossover from the land to a pit bump (see point 25 in Fig.5). The level detector 23 then enables the AND gate 27 and passes the signal to a high level detector which causes the AND to go high only if the pit/bump depth is sufficiently deep. In the preferred embodiment each pit presents the opportunity to encode a single secondary data bit regardless of the length of the pit/bump. The logic presented recognizes the termination of a single pit/bump in order to provide for the situation where two identical bits occur in succession.

One advantage of the present invention is that it is not necessary to provide error correction in as much detail for the secondary data as for the primary data, because the primary data can contain such information as is necessary to locate the origin of a data word in the event that foreign particles obscure the data. In effect, checksum data or its equivalent which is provided in the primary data will show when reading errors have become excessive and the reading head can assume that such errors are not affecting the secondary data if they have not affected the primary data. This piggyback effect, is not to my knowledge implemented in any other form of data communication.

The process for manufacturing a disc according the present invention is as follows:

The normal manufacturing process for a CD is altered by taking the normal laser writing signal that is modulated in an on/off manner to encode the pits and further modulating the intensity of the laser to create different exposure levels in the photoresist or in the non-photoresist coating on a glass master. In an ablative process the same variation in laser intensity is performed. Typical wavelengths for the reading light are 780 nm for CD's and 650 nm for DVD's.

One use for the present invention is to superpose a hologram onto the data portion of the data recording surface of a CD. This is accomplished by taking a conventional hologram from a surface where one is impressed in plastic and recording the height of each pixel element and expressing that data in a digital form for recording on the surface of a CD. This causes a slight distortion of the hologram since the present invention is restricted to pixels that correspond in dimension to the length of the available pits. It has unexpectedly been discovered, however, that in view of the small size of the pits/bumps on the surface a conventional hologram, that this slight distortion is not a significant detriment to the operation of this method.

In a further embodiment the pit depths of a disc medium include n-2 additional depths and each such pit depth represents a digit in a base n system, wherein the density of data represented by said pit depths is enhanced by a factor of (n/2)^x where x is the word length.

## Claims

1. A disc medium (1) for the optical recording of first and second digital data for readout by a laser (7) having a wavelength λ comprising:
a series of pits (3) formed in a plastic base layer through which laser light reflected from said pits is detectable by a reading head (11) and arranged in a spiral pattern having
a predetermined plurality of lengths encoding first digital data and
a separate predetermined plurality of pit depths encoding second digital data simultaneously with the first digital data,
wherein said plurality of pit depths comprises at least two different predetermined pit depths.

2. The disc medium (1) according to claim 1,
wherein said plurality of pit depths comprises at least the depths λ/2 and λ/4.

3. The disc medium (I) according to claim 2,
wherein said pit depths include n-2 additional depths and each such pit depth represents a digit in a base n system wherein the density of data represented by said pit depths is enhanced by a factor of (n/2)^x where x is the word length.

4. The disc medium (1) according to any of claims 1 to 3,
wherein said second digital data comprises a bit pattern which when implemented in variable pit depths forms a hologram observable through a transparent surface of said disc medium (1) using incoherent light sources.

5. The disc medium (1) according to any of claims 1 to 4,
wherein said second digital data comprises a bit pattern which when implemented in variable pit depths forms a security encoded area on said disc (1).

6. The disc medium (1) according to any of claims 1 to 5, wherein the second digital data is encoded by a pit of greater depth (λ/2) representing a digital 1 and a pit of lesser depth (λ/4) representing a digital 0 or vice versa.

7. The disc medium (1) according to any of claims 1 to 6, wherein the second digital data is encoded by transitions from a pit of greater depth (λ/2) to a pit of lesser depth (λ/4) and the absence of such a transition representing different binary digits.

## Patentansprüche

1. Ein Plattenmedium (1) zur optischen Aufzeichnung erster und zweiter digitaler Daten, die zum Auslesen mittels eines Lasers (7) mit einer Wellenlänge λ bestimmt sind, welches umfasst:
Eine Reihe von Vertiefungen (pits) (3), die ausgebildet ist in einer aus Kunststoff bestehenden Basisschicht, durch welche Laserlicht, welches von den Vertiefungen reflektiert wird, erfassbar ist mittels eines Lesekopfs (11), wobei die Reihe von Vertiefungen in einem spiralförmigen Muster angeordnet ist, mit
einer vorbestimmen Anzahl von Längen, die die ersten digitalen Daten kodieren, und
einer davon unabhängigen vorbestimmten Anzahl von Vertiefungstiefenwerten, die die zweiten digitalen Daten gleichzeitig mit den ersten digitalen Daten kodieren,
wobei die Anzahl von Vertiefungstiefen zumindest zwei verschiedenen vorbestimmte Vertiefungstiefen umfasst.

2. Das Plattenmedium (1) gemäß Anspruch 1, wobei die Vielzahl von Vertiefungstiefen zumindest die Tiefen λ/2 und λ/4 umfasst.

3. Das Plattenmedium (1) nach Anspruch 2, wobei die Vertiefungstiefen n-2 zusätzliche Tiefen umfassen und eine jede solche Vertiefungstiefe eine Ziffer in einem System der Basis n darstellt, wobei die Dichte der durch die Vertiefungstiefen dargestellten Daten vergrößert wird um einen Faktor (n/2)^x, wobei x die Wortlänge ist.

4. Das Plattenmedium (1) nach einem der Ansprüche 1 bis 3, wobei die zweiten digitalen Daten ein Bitmuster umfassen, welches dann, wenn es in verschiedenen Vertiefungstiefen ausgeführt wird, ein Hologramm bildet, welches beobachtbar ist durch eine transparente Oberfläche des Plattenmediums (1), bei der Verwendung inkohärenter Lichtquellen.

5. Das Plattenmedium (1) nach einem der Ansprüche 1 bis 4, wobei die zweiten digitalen Daten ein Bitmuster umfassen, welches wenn es ausgeführt wird in variablen Vertiefungstiefen eine zu Sicherungszwecken kodierte Fläche auf der Platte (1) bildet.

6. Das Plattenmedium (1) nach einem der Ansprüche 1 bis 5, wobei die zweiten digitalen Daten kodiert sind mittels einer Vertiefung mit größerer Tiefe (λ/2), die einer digitalen Eins entspricht, und einer Vertiefung mit geringerer Tiefe (λ/4), die einer digitalen Null entspricht, oder umgekehrt.

7. Das Plattenmedium (1) nach einem der Ansprüche 1 bis 6, wobei die zweiten digitalen Daten kodiert sind durch Übergänge von einer Vertiefung mit größerer Tiefe (λ/2) zu einer Vertiefung mit geringerer Tiefe (λ/4) und wobei die Abwesenheit eines solchen Übergangs verschiedene binäre Ziffern repräsentiert.

## Revendications

1. Moyen de disque (1) pour l'enregistrement optique de premières et secondes données numériques destinées à être lues par un laser (7) présentant une longueur d'onde λ, comportant :
une série de puits (3) formés dans une couche de base plastique à travers laquelle la lumière laser réfléchie à partir desdits puits peut être détectée par une tête de lecture (11) et disposés dans un dessin en spirale présentant
une pluralité prédéterminée de premières données numériques codant les longueurs et
une pluralité prédéterminée séparée de secondes données numériques codant les profondeurs de puits simultanément avec les premières données numériques, dans lequel ladite pluralité de profondeurs de puits comporte au moins deux différentes profondeurs de puits prédéterminées.

2. Moyen de disque (1) selon la revendication 1, dans lequel ladite pluralité de profondeurs de puits comporte au moins les profondeurs λ/2 et λ/4.

3. Moyen de disque (1) selon la revendication 2, dans lequel lesdites profondeurs de puits comprennent des profondeurs additionnelles n-2 et chaque dite profondeur de puits représente un chiffre dans un système à base n dans lequel la densité des données représentées par lesdites profondeurs de puits est augmentée d'un facteur de (n/2)^x dans lequel x est la longueur de mot.

4. Moyen de disque (1) selon l'une quelconque des revendications 1 à 3, dans lequel lesdites secondes données numériques comprennent un dessin de bits qui lorsqu'il est appliqué dans des profondeurs de puits variables forme un hologramme observable à travers une surface transparente dudit moyen de disque (1) faisant appel à des sources de lumière incohérente.

5. , Moyen de disque (1) selon l'une quelconque des revendications 1 à 4, dans lequel lesdites secondes données numériques comprennent un dessin de bits qui lorsqu'il est appliqué dans des profondeurs de puits variables forme une zone codée de sécurité sur ledit disque (1).

6. Moyen de disque (1) selon l'une quelconque des revendications 1 à 5, dans lequel lesdites secondes données numériques sont codées par un puits de profondeur plus grande (λ/2) présentant un 1 numérique et un puits de profondeur moins grande (λ/4) représentant un 0 numérique ou vice versa.

7. Moyen de disque (1) selon l'une quelconque des revendications 1 à 6, dans lequel lesdites secondes données numériques sont codées par des transitions à partir d'un puits de profondeur plus grande (λ/2) à un puits de profondeur moins grande (λ/4) et l'absence d'une telle transition représentant deschiffres binaires différents.
